(19) Europäisches Patentamt
European Patent Office
Office européen des brevets

(11) **EP 4 589 688 A1**

(12) **EUROPEAN PATENT APPLICATION**
published in accordance with Art. 153(4) EPC

(43) Date of publication:
**23.07.2025 Bulletin 2025/30**

(21) Application number: 23865744.9

(22) Date of filing: **17.08.2023**

(51) International Patent Classification (IPC):
*H01M 4/505* (2010.01)    *H01M 4/525* (2010.01)
*H01M 10/0525* (2010.01)    *H01M 4/485* (2010.01)
*H01M 4/02* (2006.01)

(52) Cooperative Patent Classification (CPC):
**H01M 4/02; H01M 4/485; H01M 4/505;**
**H01M 4/525; H01M 10/0525;** Y02E 60/10

(86) International application number:
**PCT/KR2023/012154**

(87) International publication number:
**WO 2024/058444 (21.03.2024 Gazette 2024/12)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.09.2022  KR 20220116416**
            **28.09.2022  KR 20220123671**

(71) Applicant: SK On Co., Ltd.
**Seoul 03161 (KR)**

(72) Inventors:
• **PARK, Young Uk**
  **Daejeon 34124 (KR)**
• **KIM, Seung Hyun**
  **Daejeon 34124 (KR)**
• **LEE, Sang Han**
  **Daejeon 34124 (KR)**
• **CHO, Yong Hyun**
  **Daejeon 34124 (KR)**

(74) Representative: **Stolmár & Partner**
**Patentanwälte PartG mbB**
**Blumenstraße 17**
**80331 München (DE)**

(54) **POSITIVE ELECTRODE FOR LITHIUM SECONDARY BATTERY, AND LITHIUM SECONDARY BATTERY COMPRISING SAME**

(57)    A cathode for a lithium secondary battery according to exemplary embodiments may include a cathode current collector; and a cathode active material layer formed on the cathode current collector and including over-lithiated oxide particles. An electrochemically active surface area of the cathode may be 0.5 $m^2$/g to 2.5 $m^2$/g.

[FIG. 1]

100

110
105
110

EP 4 589 688 A1

**Description**

[Technical Field]

The present disclosure relates to a positive electrode (hereinafter, referred to as a "cathode") for a lithium secondary battery, and a lithium secondary battery including the same. More specifically, the present disclosure relates to a cathode for a lithium secondary battery including over-lithiated oxide particles, and a lithium secondary battery including the cathode.

[Background Art]

A secondary battery is a battery which can be repeatedly charged and discharged, and has been widely applied to portable electronic devices such as a mobile phone, a laptop computer, etc. as a power source thereof.

A lithium secondary battery has a high operating voltage and a high energy density per unit weight, making it advantageous in terms of charging speed and lightweight design. In this regard, the lithium secondary battery has been actively developed and applied to various industrial fields.

The lithium secondary battery may store an electric energy by a difference in chemical potential when lithium ions are intercalated and deintercalated between a cathode and an anode. Accordingly, the lithium secondary battery may use materials capable of reversibly intercalating and deintercalating the lithium ions as a cathode active material and an anode active material.

For example, as the cathode active material, lithium metal oxide particles having a layered crystal structure of $ABO_2$ (e.g., lithium cobalt oxide ($LiCoO_2$), lithium nickel oxide ($LiNiO_2$), lithium manganese oxide ($LiMnO_2$), lithium nickel-cobalt-manganese oxide (NCM), lithium nickel-aluminum-manganese oxide (NCA), etc.) are used. The lithium metal oxide particles may realize a reversible capacity of about 100 mAh/g to 230 mAh/g.

Meanwhile, as the lithium secondary battery is applied to electric vehicles (EVs), lithium metal oxide particles having a higher capacity than the lithium metal oxide particles are being researched and developed.

The over-lithiated oxide particles are known to have a structure in which lithium is inserted into a transition metal site of lithium metal oxide particles having a layered crystal structure of $ABO_2$. Accordingly, the over-lithiated oxide particles may be expressed as $Li_aM_bO_2$ (M is a transition metal such as Mn, Ni or Co, etc., and a and b satisfy $1.8 \leq a+b \leq 2.2$ and $a/b \geq 1.05$).

According to XRD analysis results for the over-lithiated oxide particles, the over-lithiated oxide particles may include $Li_2MnO_3$ domains (C2/m space group) and $LiMO_2$ domains (R3m space group, M is Mn, Ni or Co, etc.). Accordingly, the over-lithiated oxide particles may be expressed as $xLi_2MnO_3 \cdot (1-x)LiMO_2$ (0.05<x<1).

The over-lithiated oxide particles may exhibit a reversible capacity of 250 mAh/g or more by an electrochemical reaction of $Li_2MnO_3$.

For example, $Li_2MnO_3$ is electrochemically inactive, but may be converted into $LiMnO_2$ as shown in Scheme 1 below by an activation process (e.g., charging and discharging a lithium secondary battery using over-lithiated oxide particles at 4.4 V (vs $Li/Li^+$) or more). The $LiMnO_2$ may reversibly intercalate and deintercalate lithium ions as shown in Scheme 2 below. Thereby, the over-lithiated oxide particles may exhibit a high reversible capacity according to the $LiMO_2$ domains and the $Li_2MnO_3$ domains.

[Scheme 1] (Charge) $Li_2MnO_3 \rightarrow MnO_2 + 2Li^+ + 1/2O_2 + 2e^-$ (Discharge) $MnO_2 + Li^+ + e^- \rightarrow LiMnO_2$

[Scheme 2] (Charge) $LiMnO_2 \rightarrow MnO_2 + Li^+ + e^-$ (Discharge) $MnO_2 + Li^+ + e^- \rightarrow LiMnO_2$

However, the over-lithiated oxide particles exhibit inferior operational reliability (such as reduced lifespan characteristics, etc.).

[Summary of Invention]

[Problems to be Solved by Invention]

An object of the present disclosure is to provide a cathode for a lithium secondary battery having improved capacity and operational reliability.

Another object of the present disclosure is to provide a lithium secondary battery having improved capacity and operational reliability.

[Means for Solving Problems]

A cathode for a lithium secondary battery according to exemplary embodiments of the present disclosure may include: a cathode current collector; and a cathode active material layer formed on the cathode current collector and including a cathode active material containing over-lithiated oxide particles represented by Formula 1 below. An electrochemically active surface area of the cathode represented by Equation 1 below may be 0.5 m²/g to 2.5 m²/g:

[Formula 1]  $Li_a[M_xNi_yMn_z]O_b$

In Formula 1, M is at least one of Co, Mg, V, Ti, Al, Fe, Ru, Zr, W, Sn, Nb, Mo, Cu, Zn, Cr, Ga, V and Bi, and x, y, z a and b may satisfy $0{\leq}x{\leq}0.9$, $0{\leq}y{\leq}0.9$, $x+y>0$, $0.1{\leq}z{\leq}0.9$, $1.8{\leq}a+x+y+z{\leq}2.2$, $1.05{\leq}a/(x+y+z){\leq}1.95$, and $1.8{\leq}b{\leq}2.2$.

[Equation 1]

$$\text{Electrochemically active surface area } (m^2/g) \ = \ C(F)/[W(g) \times \{0.2(F/m^2)\}]$$

In Equation 1, C is a capacitance of a cathode on one side measured by analyzing a two-electrode symmetric cell manufactured using two cathodes through cyclic voltammetry, and W is a weight of the cathode active material included in one cathode in the above two-electrode symmetric cell.

In one embodiment, the cathode may have an electrochemically active surface area of 1.1 m²/g to 1.8 m²/g.

In one embodiment, the XRD peak intensity ratio represented by Equation 2 below may be 4% or more:

[Equation 2]

$$\text{XRD peak intensity ratio } (\%) \ = \ 100 \times I(110)/[I(110) + I(003)]$$

In Equation 2, I (110) is a maximum height of a (110) plane peak in the XRD spectrum analyzed from the cathode active material layer, and I (003) is a maximum height of a (003) plane peak.

In one embodiment, a content of the over-lithiated oxide particles, based on a total weight of the cathode active material layer, may be 80 wt% or more.

In one embodiment, a density of the cathode active material layer may be 2.5 g/cc to 3.8 g/cc.

In one embodiment, a molar fraction of manganese relative to all elements excluding lithium and oxygen in the over-lithiated oxide particles may be 0.5 to 0.75.

In one embodiment, a molar fraction of cobalt relative to all elements excluding lithium and oxygen in the over-lithiated oxide particles may be 0 to 0.02.

In one embodiment, the over-lithiated oxide particles may have a form of a secondary particle in which a plurality of primary particles are aggregated, and the plurality of primary particles may include plate-shaped particles having an aspect ratio of 3 to 9.

In one embodiment, in a scanning electron microscope (SEM) image capturing a cross-section of the over-lithiated oxide particles for measurement, a ratio of a total area of the plate-shaped particles to an area of the over-lithiated oxide particles may be 0.8 or more.

In one embodiment, the over-lithiated oxide particles may include over-lithiated oxide particles which satisfy Equation 3 below:

[Equation 3]

$$P_h/P_f \ < \ 0.2$$

In Equation 3, $P_f$ is a total area of pores present within the over-lithiated oxide particles, in a scanning electron microscope (SEM) image capturing a cross-section of the over-lithiated oxide particles for measurement. $P_h$ is a total area of pores present in a region having a thickness of 0.5R from the surface of the over-lithiated oxide particles, when a radius of the over-lithiated oxide particle is defined as R.

In one embodiment, the over-lithiated oxide particle may include at least one of $Li_2MnO_3$ domains and domains derived from the $Li_2MnO_3$ domains.

In one embodiment, the domain derived from the $Li_2MnO_3$ domain may include at least one selected from the group consisting of $MnO_2$, $Mn_2O_4$, $LiMnO_2$, $LiMn_2O_4$ and $Li_2Mn_2O_4$.

In one embodiment, the cathode may satisfy Equation 4 below:

$$[\text{Equation 4}]$$

$$(Rct2/Rct1) \times 100 \le 220\%$$

In Equation 4, when a half-cell is manufactured using the cathode and a lithium counter electrode, Rct1 is a charge transfer resistance value of the cathode measured according to an electrochemical impedance analysis method after the half-cell undergoes 100 cycles of repeatedly charging at 1C and discharging at 1C within a voltage range of 2 V to 4.3 V and at 45 °C. Rct2 is a charge transfer resistance value of the cathode measured according to the electrochemical impedance analysis method after the half-cell undergoes 100 cycles of repeatedly charging at 1C and discharging at 1C within a voltage range of 2 V to 4.5 V and at 45 °C.

A lithium secondary battery according to exemplary embodiments of the present disclosure may include: the cathode; and an anode disposed to face the cathode.

In one embodiment, an upper limit of operating voltage may be 4.5 V or less relative to an oxidation-reduction potential of lithium.

[Advantageous effects]

The cathode for a lithium secondary battery according to exemplary embodiments of the present disclosure may exhibit a high capacity by including over-lithiated oxide particles. In addition, it may exhibit improved lifespan characteristics by satisfying Equation 1 described below.

The cathode for a lithium secondary battery according to some embodiments may have improved output characteristics by including over-lithiated oxide particles having a predetermined morphology.

The lithium secondary battery according to exemplary embodiments may have improved lifespan characteristics and output characteristics by including the cathode.

[Brief Description of Drawings]

FIG. 1 is a schematic cross-sectional view of a cathode for a lithium secondary battery according to exemplary embodiments.

FIGS. 2 and 3 are a schematic plan view and a cross-sectional views illustrating a lithium secondary battery according to exemplary embodiments, respectively.

FIGS. 4, 6, 8 and 10 are images capturing surfaces of over-lithiated oxide particles of Examples 1 and 2, and Comparative Examples 1 and 2 for measurement, respectively, observed using a scanning electron microscope (SEM).

FIGS. 5, 7, 9 and 11 are images capturing cross-sections of over-lithiated oxide particles of Examples 1 and 2, and Comparative Examples 1 and 2 for measurement, respectively, observed using the scanning electron microscope (SEM).

[Mode for Carrying out Invention]

According to exemplary embodiments of the present disclosure, a cathode for a lithium secondary battery, which includes over-lithiated oxide (OLO) particles and exhibits improved capacity and lifespan characteristics, is provided.

In addition, a lithium secondary battery including the cathode is provided.

Hereinafter, the embodiments of the present disclosure will be described in detail with reference to the accompanying drawings. However, these embodiments are merely examples, and the present disclosure is not limited to the specific embodiments described as the examples. **Cathode for a lithium secondary battery**

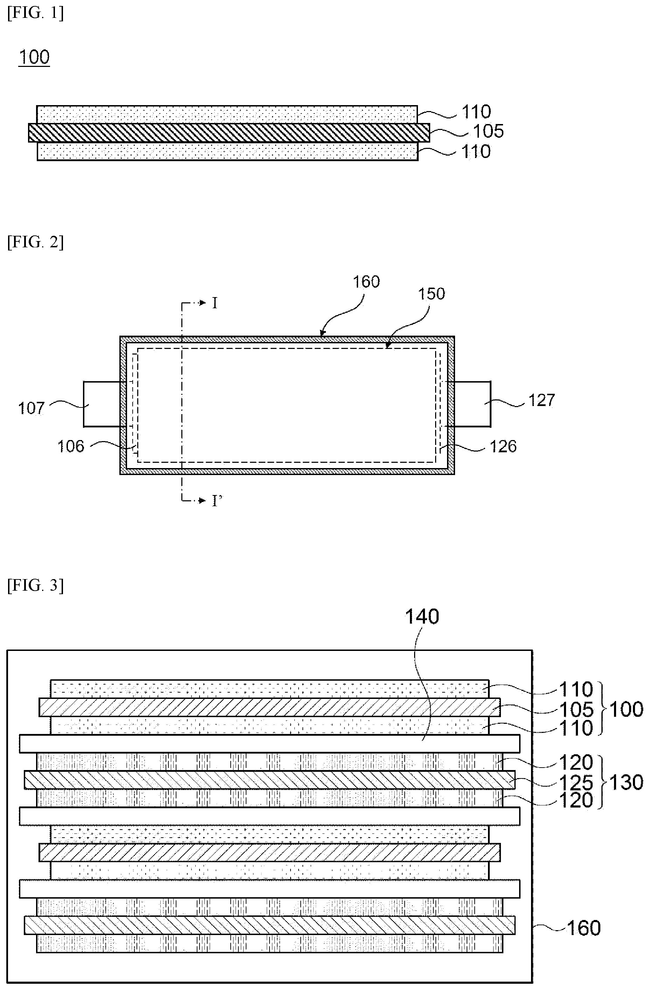

FIG. 1 is a schematic cross-sectional view illustrating a cathode for a lithium secondary battery according to exemplary embodiments.

Referring to FIG. 1, a cathode 100 for a lithium secondary battery may include a cathode current collector 105 and a cathode active material layer 110 formed on the cathode current collector 105.

For example, the cathode active material layer 110 may be formed on one surface or both surfaces of the cathode current collector 105.

For example, the cathode current collector 105 may include stainless steel, nickel, aluminum, titanium, copper, or an alloy thereof.

The cathode active material layer 110 may include cathode active material capable of reversibly intercalating and deintercalating lithium ions. For example, the cathode active material may include lithium metal oxide particles.

In exemplary embodiments, the cathode active material may include over-lithiated oxide particles.

In one embodiment, the over-lithiated oxide particles may include $Li_2MnO_3$ domains (C2/m space group) and $Li_aM_bO_c$ domains (R3m space group, wherein M is at least one of Ni Mn, Co, Mg, V, Ti, Al, Fe, Ru, Zr, W, Sn, Nb, Mo, Cu, Zn, Cr, Ga, V and Bi, and a, b and c satisfy $1.8 \leq a+b \leq 2.2$, $0.9 \leq a/b < 1.05$ and $1.9 \leq c \leq 2.1$).

In some embodiments, in the over-lithiated oxide particles, a molar ratio of the $Li_2MnO_3$ domains and the $LiMO_2$ domains may be represented as w:1-w, wherein w may be 0.05 to 0.7, or 0.1 to 0.7.

For example, the over-lithiated oxide particles may be prepared by a co-precipitation method.

For example, various types of of metal salts, a chelating agent (e.g., ammonia water, ammonium carbonate, etc.) and a co-precipitant (e.g., sodium hydroxide, sodium carbonate, etc.) may be mixed and subjected to a co-precipitation reaction to prepare metal hydroxide particles. For example, a molar ratio between the various types of metal salts may be adjusted based on a predetermined formula of the intended over-lithiated oxide particles.

For example, the over-lithiated oxide particles may be prepared by mixing the metal hydroxide particles and a lithium source so that a molar ratio of the lithium source to the number of moles of the metal hydroxide particles is 1.05 to 1.95, 1.1 to 1.95, 1.15 to 1.95 or 1.2 to 1.95, followed by calcining the same.

In one embodiment, the lithium source may include lithium hydroxide or lithium carbonate. In some embodiments, the lithium source may include lithium hydroxide.

In one embodiment, the calcination may be performed at 400 to 1100°C. For example, the calcination may be performed for 2 to 16 hours.

In some embodiments, the calcination may include a first calcination performed at 200 to 300°C and a second calcination performed at 700 to 1100°C.

For example, the over-lithiated oxide particles may be activated by applying a voltage of 4.4 V (vs Li/Li$^+$) or more (e.g., 4.4 V to 4.8 V) to the over-lithiated oxide particles (see Scheme 1-1 below). Alternatively, the over-lithiated oxide particles may be activated by charging and discharging a preliminary lithium secondary battery including the over-lithiated oxide particles at a voltage of 4.4 V (vs Li/Li$^+$) or more (see Schemes 1-1 and 1-2 below).

In one embodiment, the activated particles may include domains derived from $Li_2MnO_3$ domains of the over-lithiated oxide particles.

In some embodiments, the domain derived from the $Li_2MnO_3$ domains may include at least one of $MnO_2$, $Mn_2O_4$, $LiMnO_2$, $LiMn_2O_4$ and $Li_2Mn_2O_4$.

For example, at least some of the $Li_2MnO_3$ domains of the over-lithiated oxide particles may be converted into $MnO_2$ and $LiMnO_2$ by the activation as shown in Schemes 1-1 and 1-2 below. The $MnO_2$ and $LiMnO_2$ may reversibly intercalate and deintercalate lithium ions as shown in Scheme 2 below. Accordingly, the over-lithiated oxide particles may exhibit high capacity.

[Scheme 1-1]        (Charge) $Li_2MnO_3 \rightarrow MnO_2 + 2Li+ + 1/2O_2 + 2e^-$

[Scheme 1-2]        (Discharge) $MnO_2 + Li^+ + e^- \rightarrow LiMnO_2$

[Scheme 2]        (Charge) $LiMnO_2 \rightarrow MnO_2 + Li^+ + e^-$ (Discharge) $MnO_2 + Li^+ + e^- \rightarrow LiMnO_2$

In some embodiments, the $LiMnO_2$ of the activated particles may be further reacted to be converted into $Mn_2O_4$, $LiMn_2O_4$ or $Li_2Mn_2O_4$.

In some embodiments, the activated particles may include domains derived from the $Li_aM_bO_c$ domains, and $Li_2MnO_3$ domains and/or the $Li_2MnO_3$ domains.

In exemplary embodiments, the over-lithiated oxide particles and/or the activated particles may be represented by Formula 1 below.

[Formula 1]        $Li_a[M_xNi_yMn_z]O_b$

In Formula 1, M may be at least one of Co, Mg, V, Ti, Al, Fe, Ru, Zr, W, Sn, Nb, Mo, Cu, Zn, Cr, Ga, V and Bi.

Here, x, y, z a and b may satisfy $0 \leq x \leq 0.9$, $0 \leq y \leq 0.9$ (wherein x+y>0), $0.1 \leq z \leq 0.9$, $1.8 \leq a+x+y+z \leq 2.2$, $1.05 \leq a/(x+y+z) \leq 1.95$, $1.8 \leq b \leq 2.2$.

In some embodiments, x may be in a range of $0 < x \leq 0.9$, $0.05 \leq x \leq 0.9$, $0.1 \leq x \leq 0.9$, $0 < x \leq 0.8$, $0.05 \leq x \leq 0.8$, or $0.1 \leq x \leq 0.8$.

In some embodiments, y may be in a range of $0 < y \leq 0.9$, $0.05 \leq y \leq 0.9$, $0.1 \leq y \leq 0.9$, $0 < y \leq 0.8$, $0.05 \leq y \leq 0.8$, or $0.1 \leq y \leq 0.8$.

In some embodiments, a, x, y and z may satisfy $1.1 \leq a/(x+y+z) \leq 1.95$, $1.15 \leq a/(x+y+z) \leq 1.95$, $1.2 \leq a/(x+y+z) \leq 1.95$, or $1.3 \leq a/(x+y+z) \leq 1.95$.

In some embodiments, a molar fraction of manganese relative to all elements excluding lithium and oxygen in the over-lithiated oxide particles may be 0.5 to 0.75. For example, x, y and z may satisfy $0.5 \leq z/(x+y+z) \leq 0.75$.

In some embodiments, x, y and z may satisfy $0.25 \leq (x+y)/(x+y+z) \leq 0.5$.

In some embodiments, a molar fraction of cobalt to all elements excluding lithium and oxygen in the over-lithiated oxide particles may be 0 to 0.02. In some embodiments, the over-lithiated oxide particles may not contain cobalt.

In some embodiments, b may be in a range of $1.9 \leq b \leq 2.1$, or $1.95 \leq b \leq 2.05$.

For example, compositions of the over-lithiated oxide particles and the activated particles may be confirmed by inductively coupled plasma (ICP). For example, the over-lithiated oxide particles and/or the activated particles may be analyzed by ICP, and the number of oxygen atoms may be normalized to 1.8 to 2.2 (e.g., 2), thus to obtain formulas of the over-lithiated oxide particles and/or the activated particles.

In one embodiment, the cathode active material layer 110 may further include a binder and a conductive material.

In one embodiment, the binder may include an organic binder such as polyvinylidene fluoride (PVDF), vinylidene fluoride-hexafluoropropylene copolymer, polyacrylonitrile, or polymethyl methacrylate, etc.; or an aqueous binder such as styrene-butadiene rubber (SBR). In addition, the binder may be used together with a thickener such as carboxymethyl cellulose (CMC).

In one embodiment, the conductive material may include a carbon-based conductive material such as graphite, carbon black, graphene, carbon nanotubes (CNTs), etc.; a metal-based conductive material such as tin, tin oxide, titanium oxide, or a perovskite material such as $LaSrCoO_3$, and $LaSrMnO_3$, etc.

In one embodiment, a content of the over-lithiated oxide particles, based on a total weight of the cathode active material layer 110, may be 80% by weight ("wt%") or more, 85 wt% or more, or 90 wt% or more. In some embodiments, the content of the over-lithiated oxide particles may be 98 wt% or less, or 95 wt% or less based on the total weight of the cathode active material layer 110.

In one embodiment, a loading amount of the cathode active material layer 110 may be 5 to 28 $mg/cm^2$, 7 to 25 $mg/cm^2$, 8 to 20 $mg/cm^2$, or 9 to 15 $mg/cm^2$.

In one embodiment, a density of the cathode active material layer 110 may be 2.5 to 3.8 g/cc, 2.6 to 3.7 g/cc, or 2.7 to 3.6 g/cc.

Meanwhile, a lithium secondary battery using the over-lithiated oxide particles may exhibit inferior lifespan characteristics due to the unique electrochemical reaction of the $Li_2MnO_3$ domain among the over-lithiated oxide particles.

In addition, a lithium secondary battery manufactured using the over-lithiated oxide particles may operate at a relatively high-voltage operating section compared to a lithium secondary battery manufactured using conventional lithium metal oxide particles. At high voltages, side reactions between the over-lithiated oxide particles and an electrolyte may intensify, leading to a deterioration in the lifespan characteristics of the lithium secondary battery.

In exemplary embodiments, an electrochemical active surface area of the cathode 100 represented by Equation 1 below may be 0.5 to 2.5 $m^2/g$. Accordingly, the lifespan characteristics of the lithium secondary battery may be improved.

[Equation 1]

$$\text{Electrochemically active surface area } (m^2/g) = C(F)/[W(g) \times \{0.2(F/m^2)\}]$$

In Equation 1, C is an electrochemical double layer capacitance (EDLC) value of a cathode on one side (i.e., one cathode) measured by analyzing a 2-electrode symmetry cell manufactured using two cathodes 100 through cyclic voltammetry. W is a weight of the cathode active material included in one cathode in the 2-electrode symmetry cell.

For example, the electrochemically active surface area of the cathode 100 may be measured according to Evaluation Example 2 which will be described below.

Unlike the Brunauer-Emmett-Teller (BET), the electrochemically active surface area may substantially grasp information related to the electrochemical reaction occuring and near the electrode surface. Accordingly, by controlling the electrochemically active surface area, the deterioration in the lifespan characteristics of the lithium secondary battery caused by the over-lithiated oxide particles may be effectively prevented.

For example, if the electrochemically active surface area of the cathode 100 is less than 0.5 $m^2/g$, the output

characteristics of the lithium secondary battery may deteriorate excessively. In addition, if the electrochemically active surface area of the cathode 100 exceeds 2.5 $m^2$/g, the lifespan characteristics of the lithium secondary battery may deteriorate.

In one embodiment, the electrochemically active surface area of the cathode 100 may be 0.5 to 2.4 $m^2$/g, 0.6 to 2.3 $m^2$/g, 0.7 to 2.2 $m^2$/g, 0.8 to 2.1 $m^2$/g, 0.9 to 2 $m^2$/g or 1 to 1.9 $m^2$/g or 1.1 to 1.8 $m^2$/g. Within the above range, the lifespan characteristics of the lithium secondary battery may be further improved.

In one embodiment, an XRD peak intensity ratio of the cathode 100 represented by Equation 2 below may be 4% or more, or 5% or more. In some embodiments, the XRD peak intensity ratio may be 10% or less, 9% or less, 8% or less, or 7% or less.

$$[\text{Equation 2}]$$

$$\text{XRD peak intensity ratio (\%)} = 100 \times I(110)/[I(110) + I(003)]$$

In Equation 2, I (110) is a maximum height of a (110) plane peak in the XRD spectrum analyzed from the cathode active material layer, and I (003) is a maximum height of a (003) plane peak.

If the cathode 100 satisfies the XRD peak intensity ratio within the above range, both the lifespan characteristics and the output performance of the lithium secondary battery may be improved.

In one embodiment, the over-lithiated oxide particle (and the activated particle) may have a form of a secondary particle in which a plurality of primary particles are aggregated.

In some embodiments, the plurality of primary particles may include plate-shaped particles having an aspect ratio of 2.5 to 12, 3 to 9, or 4 to 7. For example, the aspect ratio may be defined as a length of a long side (or major axis) of the plate-shaped particle divided by its thickness. For example, the aspect ratio may be measured from a scanning electron microscope (SEM) image of the over-lithiated oxide particle. For example, if the electrochemically active surface area of the cathode decreases, the output characteristics of the lithium secondary battery may also decrease. However, by adjusting the morphology of the primary particle to the plate-shaped shape, the decrease in the output performance may be prevented.

In some embodiments, the over-lithiated oxide particle (the secondary particle) may have a median particle diameter D50 of 2 $\mu$m to 9 $\mu$m. The median particle diameter D50 may represent a particle diameter at the 50% point of the volume particle size distribution, and may be measured using a laser diffraction method.

In some embodiments, the over-lithiated oxide particle (the secondary particle) may have a sphericity of 0.7 or more, 0.8 or more, or 0.9 or more.

In some embodiments, in a scanning electron microscope (SEM) image capturing the surface of the over-lithiated oxide particles for measurement, the length of the long side of the plate-shaped particle may be 0.1 to 3 $\mu$m, 0.3 to 2.5 $\mu$m, 0.5 to 2 $\mu$m, 0.75 to 1.5 $\mu$m, or 0.8 to 1.2 $\mu$m. In addition, the plate-shaped particle may have a thickness of 100 to 200 nm. Within the above range, the output performance of the lithium secondary battery may be further improved.

In some embodiments, in a scanning electron microscope (SEM) image capturing a cross-section of the over-lithiated oxide particles for measurement, a ratio of a total area of the plate-like particles to an area of the over-lithiated oxide particles (excluding the pore portion) may be 0.6 or more, 0.7 or more, 0.8 or more, or 0.9 or more.

In one embodiment, the over-lithiated oxide particles may include over-lithiated oxide particles which satisfy Equation 3 below. As a result, the lifespan characteristics of the lithium secondary battery may be further improved.

$$[\text{Equation 3}]$$

$$P_h/P_f < 0.2$$

In Equation 3, $P_f$ is a total area of pores present within the over-lithiated oxide particles, in a scanning electron microscope (SEM) image capturing a cross-section of the over-lithiated oxide particles for measurement. $P_h$ is a total area of pores present in a region having a thickness of 0.5R from the surface of the over-lithiated oxide particles, when a radius of the over-lithiated oxide particle is defined as R.

In some embodiments, a ratio of $P_h/P_f$ may be 0.15 or less, 0.1 or less, or 0.05 or less. In some embodiments, the ratio $P_h/P_f$ may be 0.01 or more or 0.02 or more.

In one embodiment, the cathode 100 may satisfy Equation 4 below.

[Equation 4]

$$(Rct2/Rct1) \times 100 \leq 220\%$$

In Equation 4, when a half-cell is manufactured using the cathode and a lithium counter electrode, Rct1 is a charge transfer resistance value of the cathode measured according to an electrochemical impedance analysis method after the half-cell undergoes 100 cycles of repeatedly charging at 1C and discharging at 1C within a voltage range of 2 V to 4.3 V and at 45 °C. Rct2 is a charge transfer resistance value of the cathode measured according to the electrochemical impedance analysis method after the half-cell undergoes 100 cycles of repeatedly charging at 1C and discharging at 1C within a voltage range of 2 V to 4.5 V and at 45 °C.

In some embodiments, a ratio of (Rct2/Rct1) $\times$ 100 may be 200% or less, 180% or less, 150% or less, or 130% or less.

**Lithium secondary battery**

FIG. 2 is a schematic plan view illustrating a lithium secondary battery according to exemplary embodiments. FIG. 3 is a schematic cross-sectional view of the lithium secondary battery taken on line I-I' of FIG. 2.

Referring to FIGS. 2 and 3, the lithium secondary battery may include an electrode assembly 150 and a case 160 in which the electrode assembly 150 is housed.

The electrode assembly 150 may include a cathode 100 and an anode 130 disposed to face the cathode 100. In one embodiment, the electrode assembly 150 may further include a separation membrane 140 interposed between the cathode 100 and the anode 130.

In one embodiment, the cathode 100 may be the above-described cathode for a lithium secondary battery.

For example, the anode 130 may include an anode current collector 125 and an anode active material layer 120 on the anode current collector 125. For example, the anode active material layer 120 may be formed on one or both surfaces of the anode current collector 125.

For example, the anode active material layer 120 may include an anode active material, the binder and the conductive material.

For example, the anode current collector 125 may include gold, stainless steel, nickel, aluminum, titanium, copper or an alloy thereof.

In one embodiment, the anode active material may be a material capable of intercalating and deintercalating lithium ions. For example, the anode active material may include a lithium alloy, a carbon-based active material, a silicon-based active material, etc.

For example, the lithium alloy may include aluminum, zinc, bismuth, cadmium, antimony, silicon, lead, tin, gallium, indium and the like.

For example, the carbon-based active material may include crystalline carbon, amorphous carbon, carbon composite, carbon fiber and the like.

For example, the amorphous carbon may include hard carbon, cokes, mesocarbon microbeads, mesophase pitch-based carbon fiber and the like.

For example, the crystalline carbon may include natural graphite, artificial graphite, graphite cokes, graphite MCMB, graphite MPCF and the like.

For example, the silicon-based active material may include Si, $SiO_x$ (0<x<2), Si/C, SiO/C, Si-Metal and the like.

In some embodiments, the anode 130 may have an area greater than that of the cathode 100.

In one embodiment, the cathode current collector 105 may include a cathode tab 106 protruding from one side of the cathode current collector 105.

For example, the cathode tab 106 may be formed integrally with the cathode current collector 105 or may be connected with the cathode current collector 105 by welding, etc. The cathode current collector 105 and the cathode lead 107 may be electrically connected with each other through the cathode tab 106.

In one embodiment, the anode current collector 125 may include an anode tab 126 protruding from one side of the anode current collector 125.

For example, the anode tab 126 may be formed integrally with the anode current collector 125, or may be electrically connected with the anode current collector 125 by welding, etc. The anode current collector 125 and the anode lead 127 may be electrically connected with each other through the anode tab 126.

For example, the separation membrane 140 may include a porous polymer film made of a polyolefin polymer such as polyethylene, polypropylene, ethylene-butene copolymer, ethylene-hexene copolymer, or ethylene-methacrylate copolymer. For example, the separation membrane 140 may include a nonwoven fabric made glass fiber having a high melting point, polyethylene terephthalate fiber or the like.

For example, the electrode assembly 150 and the electrolyte may be housed together in a pouch case 160 to form a lithium secondary battery.

In one embodiment, the electrolyte may include a lithium salt and an organic solvent.

In one embodiment, the lithium salt may include $Li^+X^-$. For example, $X^-$ may be at least one of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In one embodiment, the organic solvent may include a carbonate solvent such as ethylene carbonate (EC), propylene carbonate (PC), dimethyl carbonate (DMC), diethyl carbonate (DEC), ethyl methyl carbonate (EMC), etc.; an ester solvent such as methyl propionate, ethyl propionate, ethyl acetate, propyl acetate, butyl acetate, butyrolactone, caprolactone, valerolactone, etc.; an ether solvent such as dibutyl ether, tetraethylene glycol dimethyl ether (TEGDME), diethylene glycol dimethyl ether (DEGDME), tetrahydrofuran (THF), etc.; an alcohol solvent such as ethyl alcohol, isopropyl alcohol, etc.; a ketone solvent such as cyclohexanone, etc.; an aprotic solvent such as an amide solvent (e.g., dimethylformamide), a dioxolane solvent (e.g., 1,3-dioxolane), a sulfolane solvent, a nitrile solvent, etc.

In one embodiment, an upper limit of operating voltage of the lithium secondary battery may be 4.8 V or less, 4.7 V or less, or 4.6 V or less relative to a lithium oxidation-reduction potential (i.e., a redox potential) (vs Li/Li$^+$). The "upper limit of operating voltage" refers to the upper voltage reached during actual operation of the lithium secondary battery (i.e., during real-world use), and may be distinguished from the activation voltage during an activation process in a manufacturing process of the lithium secondary battery.

In some embodiments, the upper limit of operating voltage of the lithium secondary battery may be 4.5 V or less relative to the lithium oxidation-reduction potential (vs Li/Li$^+$). In some embodiments, the upper limit of operating voltage may be 4.3 V to 4.5 V. Within the above range, the lifespan characteristics of the lithium secondary battery may be further improved.

In one embodiment, the lower limit of operating voltage of the lithium secondary battery may be 1.8 V or more, 1.9 V or more, or 2.0 V or more relative to the lithium oxidation-reduction potential (vs Li/Li$^+$). In some embodiments, the lower limit of operating voltage limit may be 1.8 V to 2.2 V.

In some embodiments, the operating voltage range (i.e., the operating voltage range) of the lithium secondary battery may be 2 V (vs Li/Li$^+$) to 4.5 V (vs Li/Li$^+$).

Hereinafter, embodiments of the present invention will be further described with reference to specific experimental examples. However, the following examples and comparative examples included in the experimental examples are only given for illustrating the present invention and those skilled in the art will obviously understand that various alterations and modifications are possible within the scope and spirit of the present invention. Such alterations and modifications are duly included in the appended claims.

## Example 1

### (1) Preparation of over-lithiated oxide particles

Distilled water from which dissolved oxygen was removed was input into a sealed reactor, then $NiSO_4 \cdot 6H_2O$ and $MnSO_4 \cdot H_2O$ were additionally input at a molar ratio of 41:59.

NaOH (precipitant) and $NH_4OH$ (chelating agent) were additionally input into the reactor, then a co-precipitation reaction was performed for 60 hours, thus to prepare metal hydroxide particles.

The metal hydroxide particles were dried at 100°C for 12 hours.

The metal hydroxide particles and lithium hydroxide were input into a dry mixer to prepare a mixture.

A mixing ratio of the metal hydroxide particles and lithium hydroxide was adjusted so that the prepared lithium metal oxide particles satisfied the compositions according to the following ICP analysis.

The mixture was loaded into a calcination furnace, and the temperature of the calcination furnace was increased to 250°C at a rate of 2°C/min, then a first calcination was performed while maintaining the temperature at 250°C for 4 hours.

After the first calcination, the temperature of the calcination furnace was increased to 850°C at a rate of 2°C/min, and a second calcination was performed while maintaining the temperature at 850°C for 8 hours.

During the first and second calcinations, oxygen gas was continuously passed through the calcination furnace at a flow rate of 10 mL/min.

After complementation of the calcination, the calcined product was naturally cooled to room temperature, followed by pulverization and classification to prepare over-lithiated oxide particles.

As a result of analyzing the over-lithiated oxide particles by ICP (normalizing the number of oxygen atoms to 2), they were confirmed as $Li_{1.09}Ni_{0.38}Mn_{0.54}O_2$.

**(2) Manufacture of preliminary lithium secondary battery (half-coin cell)**

The over-lithiated oxide particles, carbon black, and PVDF were mixed in a mass ratio of 92:5:3, and then the mixture was dispersed in N-methyl-2-pyrrolidone (NMP) to prepare a cathode slurry.

The cathode slurry was applied to an aluminum foil, followed by drying and pressing the same, to prepare a cathode having a cathode active material layer formed thereon. When preparing the cathode, the loading amount of the cathode active material layer was adjusted to 11 mg/cm$^2$, and the density of the cathode active material layer was adjusted to 2.8 g/cc. Lithium metal was used as the counter electrode (anode).

The cathode and anode were laminated by notching them into circular shapes having a diameter of $\Phi14$ and $\Phi16$, respectively, and a separation membrane (PE, thickness 13 $\mu$m) notched into $\Phi19$ was interposed between the cathode and the anode to form an electrode assembly.

The electrode assembly was placed in a coin cell case (2016 standard), and an electrolyte was injected into the coin cell case to manufacture a preliminary lithium secondary battery.

The electrolyte used herein was prepared by dissolving 1M LiPF$_6$ solution in a mixed solvent of EC/EMC (30/70, v/v).

**(3) Manufacture of lithium secondary battery (Activation stage of preliminary lithium secondary battery)**

The preliminary lithium secondary battery was subjected to CC/CV charging (0.1C constant current, CC section CUT-OFF condition: 4.6V, CV section CUT-OFF condition: 0.05C) and CC discharging (0.1 C constant current, 2.0 V CUT-OFF) at 25°C.

The charging and discharging cycles were repeatedly performed twice to activate the over-lithiated oxide particles.

**Example 2**

The molar ratio of NiSO$_4$·6H$_2$O and MnSO$_4$·H$_2$O was adjusted to 27.5:72.5 to prepare over-lithiated oxide particles having a composition of (Li$_{1.19}$Ni$_{0.22}$Mn$_{0.59}$O$_2$).

Aside from this, a lithium secondary battery was manufactured in the same manner as described in Example 1.

**Comparative Example 1**

Lithium carbonate was used as a lithium source.

Over-lithiated oxide particles were prepared by performing only the second calcination for 11 hours without conducting the first calcination.

Aside from this, a lithium secondary battery was manufactured in the same manner as described in Example 1.

**Comparative Example 2**

The molar ratio of NiSO$_4$·6H$_2$O and MnSO$_4$·H$_2$O was adjusted to 38.1:61.9, and lithium carbonate was used as a lithium source.

Over-lithiated oxide particles (Li$_{1.11}$Ni$_{0.34}$Mn$_{0.55}$O$_2$) were prepared by performing only the second calcination at 1000°C for 11 hours without conducting the first calcination.

Aside from this, a lithium secondary battery was produced in the same manner as described in Example 1.

**Evaluation Example 1: Morphology measurement**

**(1) Morphology of primary particles**

The surface and cross-section of the over-lithiated oxide particles of the examples and comparative examples were observed using a scanning electron microscope (SEM).

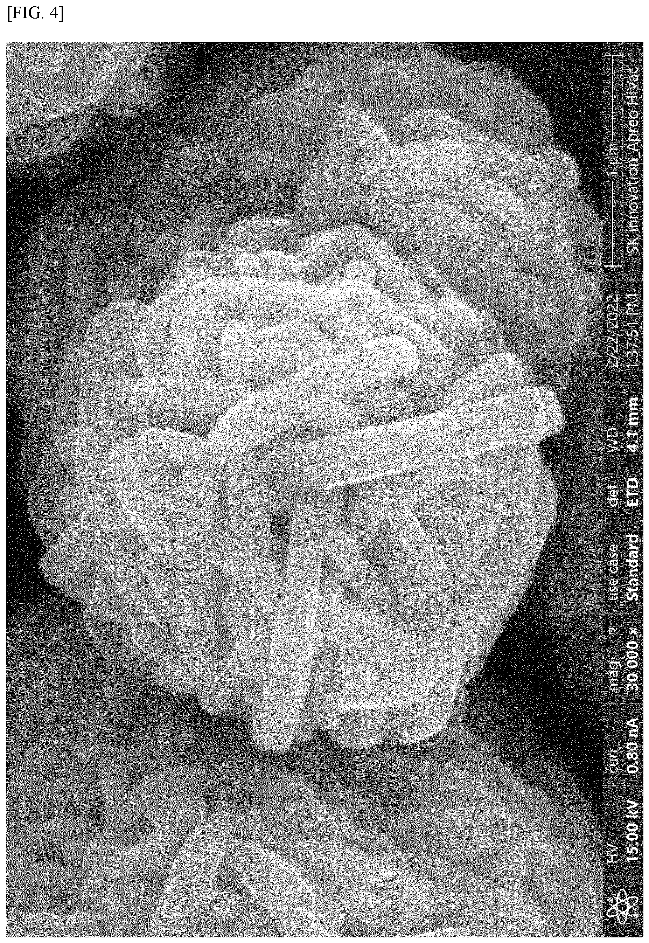

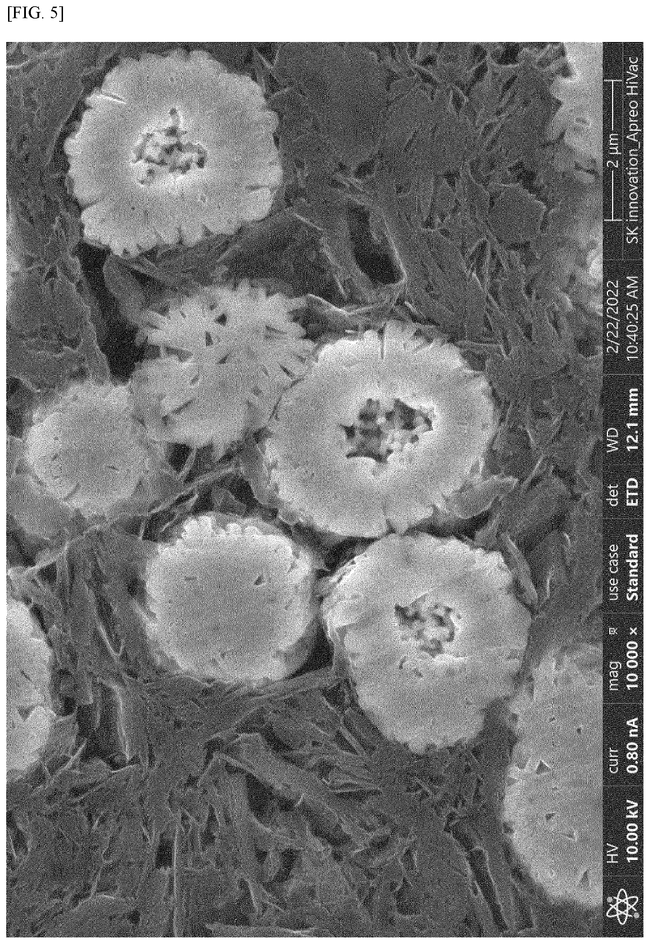

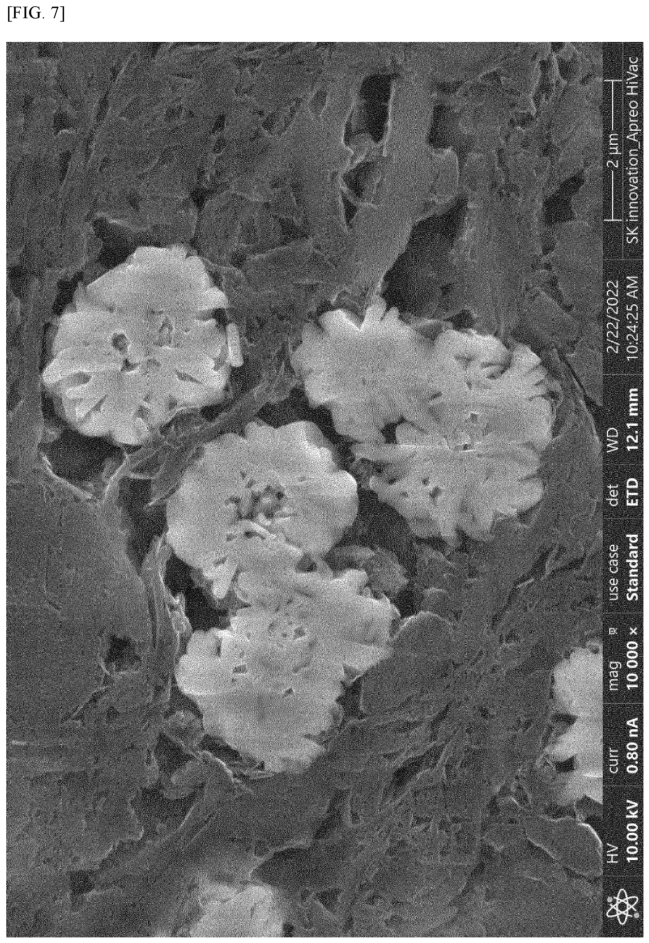

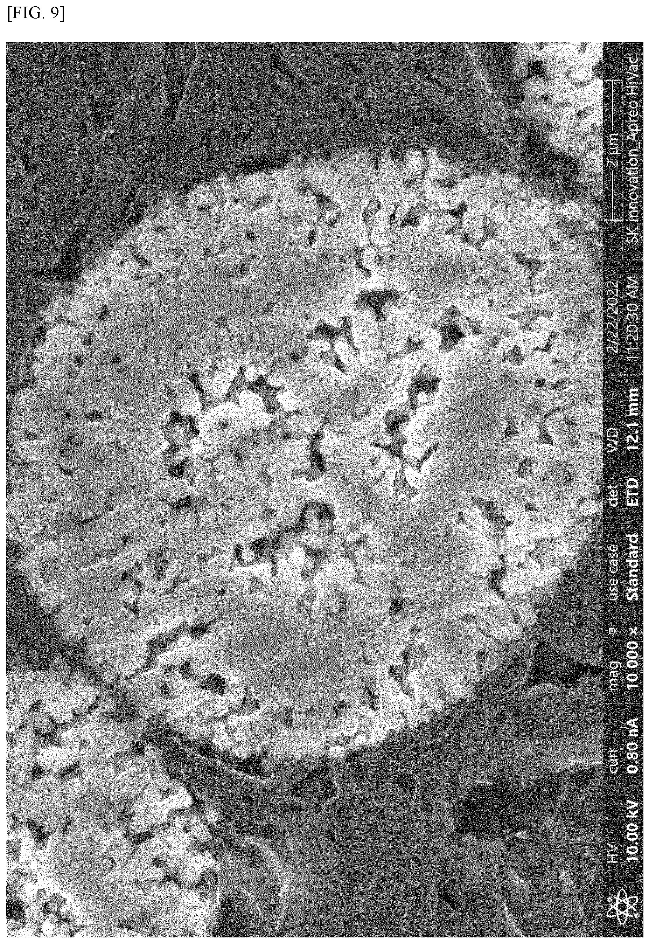

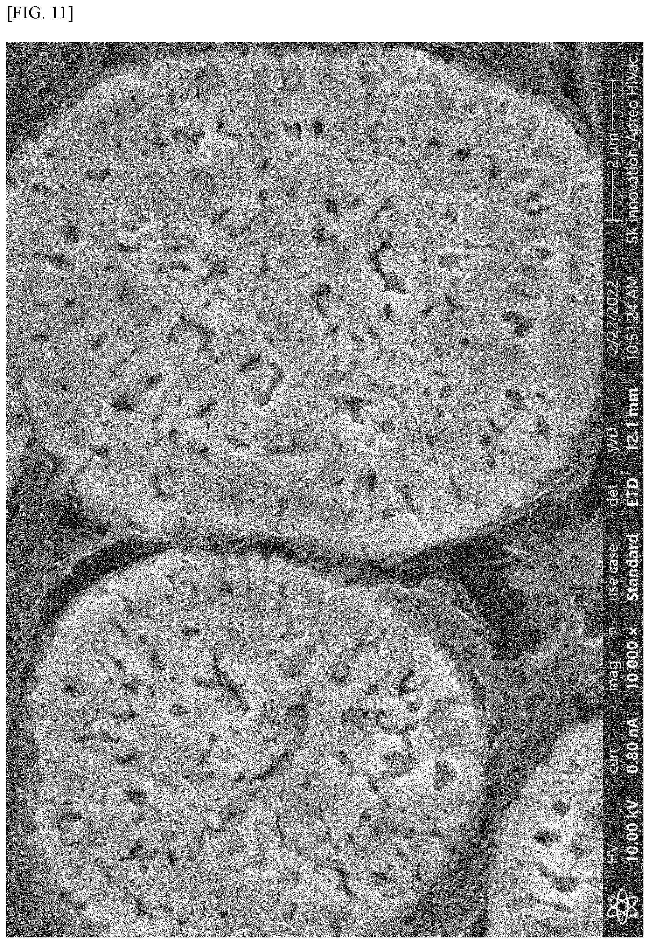

FIGS. 4, 6, 8 and 10 are SEM images capturing the surface of the over-lithiated oxide particles of Examples 1 and 2, and Comparative Examples 1 and 2 for measurement, respectively. FIGS. 5, 7, 9 and 11 are SEM images capturing the cross-section of the over-lithiated oxide particles of Examples 1 and 2, and Comparative Examples 1 and 2 for measurement, respectively.

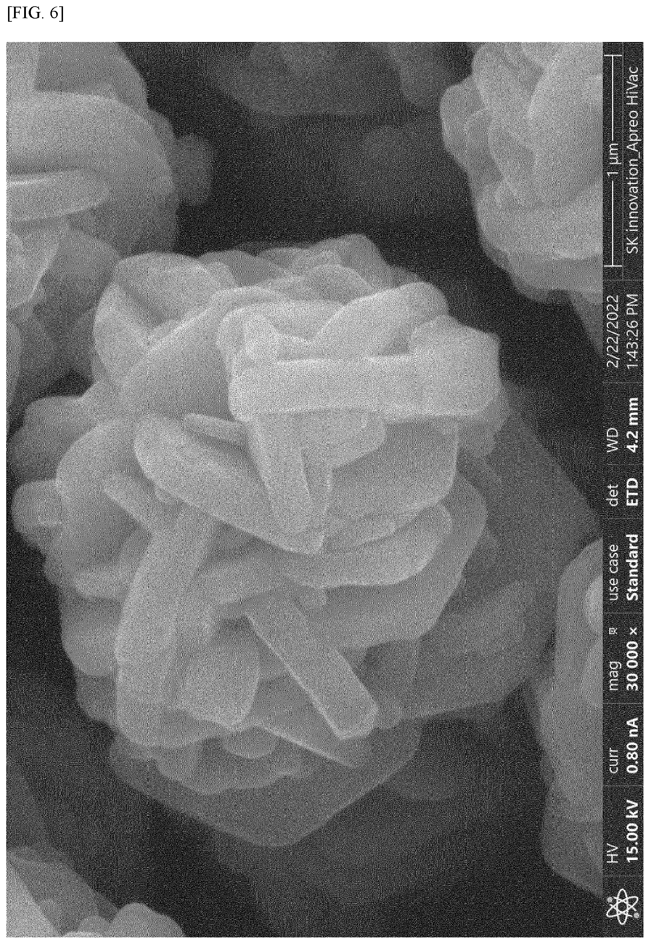

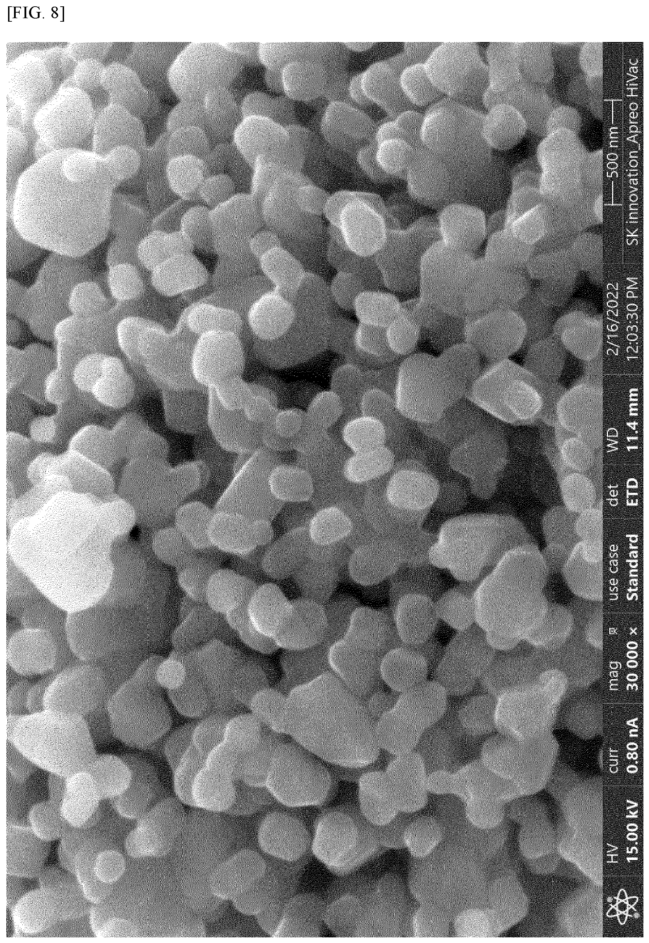

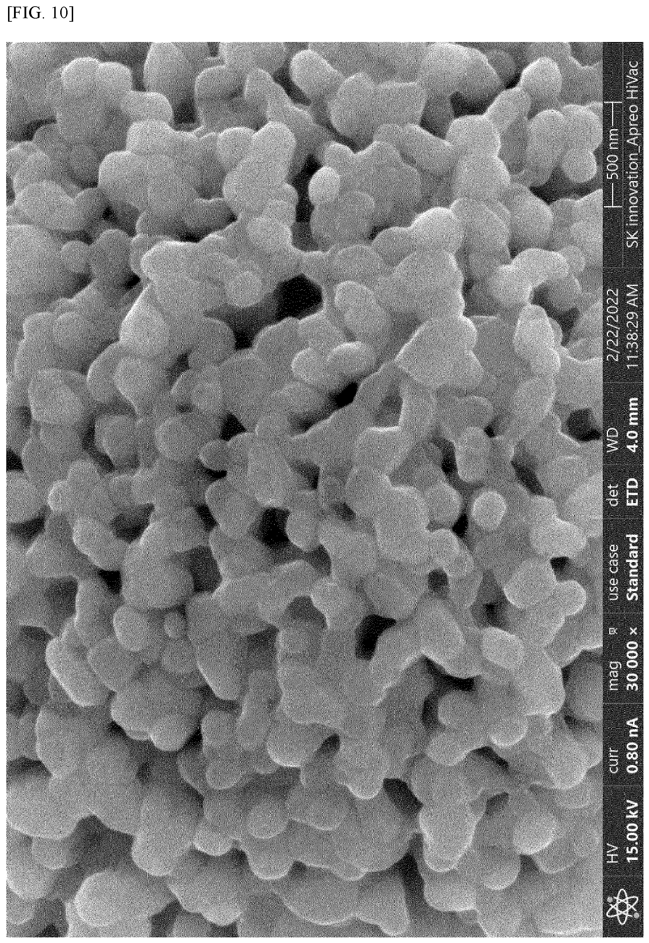

Referring to FIGS. 4 and 6, the over-lithiated oxide particles of Examples 1 and 2 have the form of a secondary particle in which plate-shaped primary particles are aggregated. Referring to FIGS. 8 and 10, the over-lithiated oxide particles of Comparative Examples 1 and 2 have the form of a secondary particle in which round polygonal primary particles are aggregated.

In the SEM surface image, three primary particles within one over-lithiated oxide particle were randomly selected, the aspect ratios of the selected primary particles were measured, and an average value of the measured aspect ratios was calculated. When measuring the aspect ratio, for the plate-shaped primary particles, the long side length/thickness were measured, while for the round polygonal primary particles, the long axis length/short axis length were measured.

### (2) Evaluation of density of primary particles

In the SEM cross-sectional image, it was confirmed whether over-lithiated oxide particles which satisfy Equation 3 below were observed.

If particles which satisfy Equation 3 below were observed, they were marked as ∘, and if particles were not observed, they were marked as ✕.

$$[\text{Equation 3}]$$

$$P_h/P_f < 0.2$$

In Equation 3, $P_f$ is the total area of pores present within the over-lithiated oxide particles in the SEM cross-sectional image (e.g., the cross-section passing through a center of the particle) of the over-lithiated oxide particles. $P_h$ is the total area of pores present in the region of a thickness of 0.5R from the surface of the over-lithiated oxide particles, when the radius of the over-lithiated oxide particles is defined as R.

In the SEM cross-sectional image, the radius R was calculated as an average value of a major radius and a minor radius of the over-lithiated oxide particles.

### Evaluation Example 2: Measurement of electrochemical active surface area of cathode

### 1) Manufacture of 2-electrode symmetric cell

Two lithium secondary batteries of Example 1 were prepared. The two lithium secondary batteries were disassembled to obtain two cathodes.

A separation membrane (PP, thickness 14 $\mu$m, Celgard, PP1410) notched into $\Phi$19 was interposed between the two cathodes to form an electrode assembly.

The electrode assembly was placed in a coin cell case (2016 standard), and an electrolyte was injected into the coin cell case to manufacture a preliminary lithium secondary battery.

As the electrolyte, a 1M $LiPF_6$ solution (solvent: EC/EMC/DEC=25/45/30 v/v%) was used.

### 2) Measurement of electrochemical double layer capacitance of cathode

The symmetrical cell was analyzed using cyclic voltammetry to measure the electrochemical double layer capacitance (EDLC, hereinafter, abbreviated as a capacitance) of the cathode.

The specific measurement method is as follows.

i) The symmetric cell was connected to a potential changer (Biologic, VMP-3). In the voltage range where no faradaic current flows in the symmetric cell (i.e., non-faradaic voltage range; -0.10 V to +0.10 V), a voltage was applied so that the potential reciprocated (initial potential → upper limit potential → initial potential → lower limit potential → initial potential), to measure a cyclic voltammogram (CV curve). When measuring the CV curve, the voltage scan rate was adjusted to 10 mV/s.

ii) The reaction (response) peak current was obtained from the CV curve.

iii) The voltage scan rate was changed to 20 mV/s, 30 mV/s, 40 mV/s, and 50 mV/s, and the steps i) and ii) were further performed.

iv) The voltage scan rate was plotted on the x-axis and the response peak current according to the voltage scan rate was plotted on the y-axis to generate a linear graph. A slope value was obtained from the linear graph (using linear regression analysis). The slope value is the total capacitance $C_{tot}$ of the two cathodes in the symmetrical cell.

v) In the symmetrical cell, since $C = 2C_{tot}$ (C is the capacitance of one cathode), $C_{tot}$ was substituted into the above equation to calculate the capacitance C of a cathode on one side (i.e., one cathode).

**3) Calculation of electrochemically active surface area of cathode**

Based on the capacitance value of a platinum (Pt) electrode (i.e., $0.2 \, F/m^2$), the electrochemically active surface area (EASA) of the cathode of Example 1 was calculated according to Equation 1 below.

[Equation 1]

$$\text{Electrochemically active surface area } (m^2/g) \; = \; C(F)/[W(g) \times \{0.2(F/m^2)\}]$$

In Equation 1, C is a capacitance value of single cathode calculated as described in the above 2), and W is a total weight of the cathode active material included in one cathode of the above symmetrical cell.

Using the same manner as described above, the active surface areas of the cathodes of Example 2, and Comparative Examples 1 and 2 were also measured.

**Evaluation Example 3: X-ray diffraction (XRD) analysis**

The lithium secondary batteries of the examples and comparative examples were disassembled to obtain cathodes, and the cathode active material layers of the cathodes were analyzed using XRD. The XRD spectrum was interpreted to calculate the XRD peak intensity ratio represented by Equation 2 below.

XRD analysis equipment and conditions are described in Table 1 below.

[TABLE 1]

| X-Ray Diffractometer (XRD) EMPYREAN | |
|---|---|
| Maker | PANalytical |
| Anode material | Cu |
| K-Alpha1 wavelength | 1.540598 Å |
| Generator voltage | 45 kV |
| Tube current | 40 mA |
| Scan Range | 10 - 120° |
| Scan Step Size | 0.006565° |
| Divergence slit | 1/4° |
| Antiscatter slit | 1° |

[Equation 2]

$$\text{XRD peak intensity ratio } (\%) = 100 \times I(110)/[I(110)+I(003)]$$

In Equation 2, I(110) is the maximum height of the (110) plane peak in the XRD spectrum, and I(003) is the maximum height of the (003) plane peak in the XRD spectrum.

**Evaluation Example 4: Evaluation of surface resistance (charge transfer resistance (Rct) of cathode**

Two lithium secondary batteries of Example 1 were prepared (hereinafter, referred to as a first battery and a second battery, respectively).

At 45°C, the first battery was charged at 1C and discharged at 1C within a voltage range of 2.0 V to 4.3 V. The charging and discharging were repeatedly performed 100 times.

The electrochemical impedance of the first battery was measured using a potential changer (Biologic, VMP-3), and the surface resistance Rct1 of the cathode was confirmed.

At 45°C, the second battery was charged at 1C and discharged at 1C within a voltage range of 2.0 V to 4.5 V. The charging and discharging were repeatedly performed 100 times.

The electrochemical impedance of the second battery was measured to determine the surface resistance Rct2 of the cathode.

According to Equation 4 below, the Rct ratio (RR, %) was calculated by comparing the cycle within the voltage range 2.0 V to 4.3 V to the cycle within the voltage range 2.0 V to 4.5 V.

$$[\text{Equation 4}]$$

$$RR(\%) = (Rct2/Rct1) \times 100$$

Using the same manner as described above, the surface resistances of the cathodes of Example 2, and Comparative Examples 1 and 2 were measured, and the RR values of Equation 4 were calculated.

**Evaluation Example 5: Evaluation of lifetime characteristics (at 45°C)**

The lithium secondary batteries of the examples and comparative examples were subjected to CC/CV charging (1C constant current, 4.5 V, and 0.05C CUT-OFF) and CC discharging (1C constant current, 2.0 V CUT-OFF).
The charging and discharging were repeated 100 times, and the discharge capacity $DC_2$ at the 2nd cycle and the discharge capacity $DC_{100}$ at the 100th cycle were measured.
The capacity retention rate was calculated according to the following equation.

$$\text{Capacity retention rate } (\%) = DC_{100}/DC_2 \times 100 \ (\%)$$

[TABLE 2]

|  | EASA ($m^2/g$) | First particle aspect ratio | Observation results for whether particles satisfy Equation 3 | XRD peak ratio (%) | RR (%) | Capacity retention rate (%) at 45°C and 100th cycle |
|---|---|---|---|---|---|---|
| Example 1 | 1.41 | 6 | ○ | 5.05 | 106 | 77.3 |
| Example 2 | 1.56 | 6 | ○ | 6.29 | 122 | 77.0 |
| Comparative Example 1 | 3.16 | 2 | × | 3.77 | 475 | 27.3 |
| Comparative Example 2 | 2.54 | 2 | × | 2.23 | 238 | 23.7 |

Referring to Table 2 above, the lithium secondary batteries of the examples exhibited improved lifespan characteristics compared to the lithium secondary batteries of the comparative examples.
In addition, the lithium secondary batteries of the examples exhibited lower surface resistance (charge transfer resistance) of the cathode, even at high voltage, compared to the lithium secondary batteries of the comparative examples.
The contents described above are merely examples of applying the principles of the present disclosure, and other configurations may be further included without departing from the scope of the present invention.

**Claims**

1. A cathode for a lithium secondary battery comprising:

   a cathode current collector; and
   a cathode active material layer formed on the cathode current collector and comprising a cathode active material including over-lithiated oxide particles represented by Formula 1 below,
   wherein an electrochemically active surface area of the cathode represented by Equation 1 below is 0.5 $m^2/g$ to 2.5 $m^2/g$:

   [Formula 1]      $Li_a[M_xNi_yMn_z]O_b$

   (in Formula 1, M is at least one of Co, Mg, V, Ti, Al, Fe, Ru, Zr, W, Sn, Nb, Mo, Cu, Zn, Cr, Ga, V and Bi, and x, y, z a and b satisfy $0 \leq x \leq 0.9$, $0 \leq y \leq 0.9$, $x+y>0$, $0.1 \leq z \leq 0.9$, $1.8 \leq a+x+y+z \leq 2.2$, $1.05 \leq a/(x+y+z) \leq 1.95$, and $1.8 \leq b \leq 2.2$),

[Equation 1]

$$\text{Electrochemically active surface area } (m^2/g) \;=\; C(F)/[W(g) \times \{0.2(F/m^2)\}]$$

(in Equation 1, C is a capacitance of a cathode on one side measured by analyzing a two-electrode symmetric cell manufactured using two cathodes through cyclic voltammetry, and W is a weight of the cathode active material included in one cathode in the above two-electrode symmetric cell).

2. The cathode for a lithium secondary battery according to claim 1, wherein the electrochemically active surface area of the cathode is 1.1 $m^2/g$ to 1.8 $m^2/g$.

3. The cathode for a lithium secondary battery according to claim 1, wherein the XRD peak intensity ratio represented by Equation 2 below is 4% or more:

[Equation 2]

$$\text{XRD peak intensity ratio } (\%) \;=\; 100 \times I(110)/[I(110) + I(003)]$$

(in Equation 2, I (110) is a maximum height of a (110) plane peak in the XRD spectrum analyzed from the cathode active material layer, and I (003) is a maximum height of a (003) plane peak).

4. The cathode for a lithium secondary battery according to claim 1, wherein a content of the over-lithiated oxide particles, based on a total weight of the cathode active material layer, is 80 wt% or more.

5. The cathode for a lithium secondary battery according to claim 1, wherein a density of the cathode active material layer is 2.5 g/cc to 3.8 g/cc.

6. The cathode for a lithium secondary battery according to claim 1, wherein a molar fraction of manganese relative to all elements excluding lithium and oxygen in the over-lithiated oxide particles is 0.5 to 0.75.

7. The cathode for a lithium secondary battery according to claim 1, wherein a molar fraction of cobalt relative to all elements excluding lithium and oxygen in the over-lithiated oxide particles is 0 to 0.02.

8. The cathode for a lithium secondary battery according to claim 1, wherein the over-lithiated oxide particles have a form of a secondary particle in which a plurality of primary particles are aggregated, and
the plurality of primary particles comprise plate-shaped particles having an aspect ratio of 3 to 9.

9. The cathode for a lithium secondary battery according to claim 8, wherein, in a scanning electron microscope (SEM) image capturing a cross-section of the over-lithiated oxide particles for measurement, a ratio of a total area of the plate-shaped particles to an area of the over-lithiated oxide particles is 0.8 or more.

10. The cathode for a lithium secondary battery according to claim 8, wherein the over-lithiated oxide particles comprise over-lithiated oxide particles which satisfy Equation 3 below:

[Equation 3]

$$P_h/P_f \;<\; 0.2$$

(in Equation 3, $P_f$ is a total area of pores present within the over-lithiated oxide particles, in a scanning electron microscope (SEM) image capturing a cross-section of the over-lithiated oxide particles for measurement, and $P_h$ is a total area of pores present in a region having a thickness of 0.5R from the surface of the over-lithiated oxide particles, when a radius of the over-lithiated oxide particle is defined as R).

11. The cathode for a lithium secondary battery according to claim 1, wherein the over-lithiated oxide particle comprises at least one of $Li_2MnO_3$ domains and domains derived from the $Li_2MnO_3$ domains.

12. The cathode for a lithium secondary battery according to claim 11, wherein the domain derived from the $Li_2MnO_3$ domain comprises at least one selected from the group consisting of $MnO_2$, $Mn_2O_4$, $LiMnO_2$, $LiMn_2O_4$ and $Li_2Mn_2O_4$.

13. The cathode for a lithium secondary battery according to claim 1, wherein the cathode satisfies Equation 4 below:

$$[\text{Equation 4}]$$

$$(Rct2/Rct1) \times 100 \leq 220\%$$

(in Equation 4, when a half-cell is manufactured using the cathode and a lithium counter electrode, Rct1 is a charge transfer resistance value of the cathode measured according to an electrochemical impedance analysis method after the half-cell undergoes 100 cycles of repeatedly charging at 1C and discharging at 1C within a voltage range of 2 V to 4.3 V and at 45 °C, and
Rct2 is a charge transfer resistance value of the cathode measured according to the electrochemical impedance analysis method after the half-cell undergoes 100 cycles of repeatedly charging at 1C and discharging at 1C within a voltage range of 2 V to 4.5 V and at 45 °C.)

14. A lithium secondary battery comprising:

the cathode according to claim 1; and
an anode disposed to face the cathode.

15. The lithium secondary battery according to claim 14, wherein an upper limit of operating voltage is 4.5 V or less relative to an oxidation-reduction potential of lithium.

[FIG. 1]

100

[FIG. 2]

[FIG. 3]

EP 4 589 688 A1

[FIG. 4]

[FIG. 5]

[FIG. 6]

[FIG. 7]

[FIG. 8]

[FIG. 9]

[FIG. 10]

[FIG. 11]

# EP 4 589 688 A1

<table>
<tr><td colspan="2">INTERNATIONAL SEARCH REPORT</td><td>International application No.<br>**PCT/KR2023/012154**</td></tr>
</table>

| | |
|---|---|
| **A.** | **CLASSIFICATION OF SUBJECT MATTER** |

**H01M 4/505**(2010.01)i; **H01M 4/525**(2010.01)i; **H01M 10/0525**(2010.01)i; **H01M 4/485**(2010.01)i; **H01M 4/02**(2006.01)i

According to International Patent Classification (IPC) or to both national classification and IPC

| | |
|---|---|
| **B.** | **FIELDS SEARCHED** |

Minimum documentation searched (classification system followed by classification symbols)

H01M 4/505(2010.01); C01G 53/00(2006.01); H01M 10/052(2010.01); H01M 10/0525(2010.01); H01M 4/36(2006.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 양극 활물질(cathode active material), 양극 집전체(cathode current collector), 양극(cathode), 리튬 과잉 산화물(overlithiated oxide), 니켈(nickel), 망간(manganese), 전기화학적 활성 표면적(electrochemical active surface area)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | JP 2018-505521 A (QUANTUMSCAPE CORPORATION) 22 February 2018 (2018-02-22)<br>    See abstract; claims 1 and 58; and paragraphs [0042]-[0043]. | 1-15 |
| A | DENG, X. et al. A Comparative Investigation of Single Crystal and Polycrystalline Ni-Rich NCMs as Cathodes for Lithium-Ion Batteries. Energy&Environmental Materials. 2023 (electronic publication: 27 November 2021), vol. 6, article no. e12331, pp. 1-7.<br>    See abstract; and page 1, right column; page 5, right column and page 6, left column. | 1-15 |
| A | KR 10-2293046 B1 (SK INNOVATION CO., LTD.) 24 August 2021 (2021-08-24)<br>    See entire document. | 1-15 |
| A | KR 10-2020-0125442 A (SAMSUNG SDI CO., LTD. et al.) 04 November 2020 (2020-11-04)<br>    See entire document. | 1-15 |
| A | KR 10-2014-0031018 A (SAMSUNG SDI CO., LTD.) 12 March 2014 (2014-03-12)<br>    See entire document. | 1-15 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 November 2023** | **24 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/012154**

| Patent document cited in search report | | | Publication date (day/month/year) | Patent family member(s) | | | Publication date (day/month/year) |
|---|---|---|---|---|---|---|---|
| JP | 2018-505521 | A | 22 February 2018 | CN | 107210419 | A | 26 September 2017 |
| | | | | CN | 107210419 | B | 08 June 2021 |
| | | | | CN | 113394392 | A | 14 September 2021 |
| | | | | EP | 3238290 | A1 | 01 November 2017 |
| | | | | EP | 3238290 | A4 | 27 June 2018 |
| | | | | KR | 10-2017-0100534 | A | 04 September 2017 |
| | | | | US | 10199649 | B2 | 05 February 2019 |
| | | | | US | 2016-0211517 | A1 | 21 July 2016 |
| | | | | WO | 2016-106321 | A1 | 30 June 2016 |
| KR | 10-2293046 | B1 | 24 August 2021 | CN | 113644255 | A | 12 November 2021 |
| | | | | CN | 113644255 | B | 07 April 2023 |
| | | | | CN | 116230922 | A | 06 June 2023 |
| | | | | EP | 3957607 | A1 | 23 February 2022 |
| | | | | US | 11637282 | B2 | 25 April 2023 |
| | | | | US | 2022-0052332 | A1 | 17 February 2022 |
| | | | | US | 2023-0223527 | A1 | 13 July 2023 |
| KR | 10-2020-0125442 | A | 04 November 2020 | EP | 3733609 | A1 | 04 November 2020 |
| | | | | EP | 3733610 | A1 | 04 November 2020 |
| | | | | KR | 10-2020-0125443 | A | 04 November 2020 |
| KR | 10-2014-0031018 | A | 12 March 2014 | KR | 10-1744091 | B1 | 07 June 2017 |
| | | | | US | 2014-0065483 | A1 | 06 March 2014 |
| | | | | US | 9236609 | B2 | 12 January 2016 |

Form PCT/ISA/210 (patent family annex) (July 2022)